# EUROPÄISCHE PATENTSCHRIFT

(11) **EP 1 861 740 B1**
(45) Veröffentlichungstag und Bekanntmachung des Hinweises auf die Patenterteilung: **11.08.2010**
(21) Anmeldenummer: 06707059.9
(22) Anmeldetag: 17.02.2006
(51) Int. Cl.: G02B 7/10

(54) **OPTISCHE OBJEKTIVBAUGRUPPE**
OPTICAL OBJECTIVE MODULE
ENSEMBLE OBJECTIF OPTIQUE

(30) Priorität: 19.08.2005 DE 102005039357
(43) Veröffentlichungstag der Anmeldung: 05.12.2007
(73) Patentinhaber: Physik Instrumente (PI) GmbH & Co. KG, 76228 Karlsruhe (DE)
(72) Erfinder: WISCHNEWSKIJ, Wladimir, 76337 Waldbronn (DE); WISCHNEWSKIJ, Alexej, 76744 Wörth (DE)
(74) Vertreter: Kruspig, Volkmar
(86) Internationale Anmeldenummer: PCT/EP2006/001474
(87) Internationale Veröffentlichungsnummer: WO 2006/099924

(56) Entgegenhaltungen:
- WO-A-2006/027031
- DE-C1- 19 734 118
- US-A- 5 146 071
- US-A- 6 134 057
- US-A1- 2005 062 346

## Beschreibung

Die Erfindung betrifft eine optische Objektivbaugruppe mit integriertem UItraschallantrieb nach dem Oberbegriff des Patentanspruchs 1. Derartige Objektivbaugruppen können in miniaturisierten hochpräzisen Foto- oder Videokameras eingesetzt werden. Des weiteren kann die Erfindung in preiswerten Miniaturgeräten der Konsumelektronik eingesetzt werden, in denen solche Kameras verwendet werden. Dazu gehören u.a. Pocket Computer, Diktiergeräte sowie Mobiltelefone.

Bekannt ist die Ausführung von optischen Objektiven als einzeln ausgeführte Einheiten, in deren Innerem optische Linsen sowie achsengleich mit den Linsen angeordnete und sie verschiebende rotatorische Ultraschallmotoren als Antrieb angeordnet sind (siehe DE 36 26 389 A1). In diesen Objektiven werden Ultraschall-Wanderwellenmotoren mit relativ großem Statordurchmesser eingesetzt.

Diese Ultraschallmotoren sind kompliziert im Aufbau, aufwendig und teuer in der Herstellung und können zudem nicht miniaturisiert werden. Aus diesem Grund werden derartige Objektiveinheiten ausschließlich in großen und zudem teuren Geräten eingesetzt.

Bekannt sind außerdem optische Objektive mit nicht achsengleich angeordneten Ultraschallmotoren kleineren Durchmessers (siehe EP 0 469 883 A2): In

diesen Objektiven werden zylinderförmige Stehwelle n-Ultraschallmotoren eingesetzt. Die Bewegungsübertragung von der Motorachse zu der zu bewegenden Linsengruppe erfolgt mittels Zahnradgetriebes mit hoher Übersetzung. Das in verschiedenen Modifikationen hergestellte Objektiv Typ Ultrasonic EF35-80 mm f/4-5,6 der Firma Canon ist ein Beispiel eines serienmäßigen Erzeugnisses einer solchen Objektiveinheit.

Ein Nachteil dieser Objektive besteht in dem komplizierten Aufbau des Ultraschallmotors und den daraus resultierenden hohen Herstellungskosten des Gesamtgerätes. Außerdem weisen Objektive mit derartigen Motoren große Abmessungen auf, da es praktisch unmöglich ist, Ultraschallmotoren mit Abmessungen kleiner als 10 mm herzustellen. Zudem haben diese Objektive - bedingt durch die verwendeten Zahnradgetriebe - eine zu geringe Genauigkeit bei der Scharfeinstellung, benötigen zu lange für die Fokussierung und verursachen Betriebsgeräusche bei der Scharfeinstellung.

Bekannt ist weiterhin die Verwendung miniaturisierter Objektiveinheiten, in denen als Antrieb miniaturisierte Rotations-Ultraschallmotoren mit geklebten Ultraschallresonatoren (siehe dazu "PIEZOELECTRIC ULTRASONIC MICROMOTORS FOR MECHATRONIC APPLICATIONS", International Center for Actuators and Transducers, The Pennsylvania State University, PA 16802, USA) eingesetzt werden. Diese Module besitzen zwei getrennte optische Linsengruppen, von denen jede über einen separaten Ultraschallmotor mittels Spindel angetrieben wird.

Nachteilig bei diesen Objektiveinheiten ist ihre komplizierte Konstruktion des Antriebs, der aus einer Vielzahl hochpräziser Teile besteht, für deren Herstellung eine teure Präzisionstechnologie erforderlich ist. Das verteuert die Objektiveinheit und verhindert den Einsatz in preiswerten Geräten der Konsumelektronik. Durch die Verwendung der Spindel werden längere Zeiten für die Fokussierung erforderlich, zudem verringert sich deutlich die Genauigkeit der Fokussierung. Ungenaue Scharfeinstellung verschlechtert die Bildqualität.

Objektive mit piezoelektrischen Linear ultraschallmotoren sind weiters aus US 6,134,057, US 5,146,071, US 2005/062346A1 oder DE 197 34 118 C bekannt. Aufgabe der Erfindung ist es, ein gattungsgemäßes Objektiv (optisches Modul) bereitzustellen, bei dem die Konstruktion vereinfacht, die Genauigkeit der Fokussierung erhöht, die Zeit für den Verstellvorgang verkürzt und die Herstellungskosten sowie der Geräuschpegel gesenkt sind.

Die gestellte Aufgabe wird durch eine Vorrichtung mit den Merkmalen des Anspruchs 1 gelöst.

Vorteilhafte Ausgestaltungen des Erfindungsgedankens sind Gegenstand der abhängigen Ansprüche.

Die Erfindung schließt den Gedanken ein, ein miniaturisiertes optisches Modul in einer derartigen Ausführung herzustellen, das ein koaxiales Verstellen von zwei Gruppen optischer Linsen mit Hilfe von zwei durch eine elektronische Steuereinheit geregelter Ultraschalllinearmotoren ermöglicht, wobei die auftretende Abweichung der optischen Achsen jeder der Linsengruppen von der optischen Achse des gesamten optischen Moduls minimal gehalten wird.

In dem bevorzugten miniaturisierten optischen Modul, das eine optische Zoom-Linsengruppe und eine fokussierende optische Linsengruppe enthält, deren sich in Koinzidenz befindende optische Achsen die optische Achse des optischen Moduls bilden, umfasst der elektrische Antrieb der angeführten optischen Linsengruppen elektronische Steuereinheiten mit den dazugehörigen Eingängen für den fotoelektrischen Abbildungssensor zur Umwandlung der Abbildung in ein elektrisches Antriebssignal der angeführten optischen Linsengruppe. Er ist ausgeführt in Form von zwei Ultraschalllinearmotoren, von denen jeder in Form einer piezoelektrischen Platte mit zwei an die gegenüberliegenden Stirnseiten angepressten Friktionselementen ausgebildet ist, welche zusammen mit den Anpresselementen die beweglichen Elemente des Ultraschallmotors bilden, wobei jedes der beweglichen Elemente elastisch mit der entsprechenden optischen Linsengruppe verbunden ist, wobei die Ultraschallmotoren so angeordnet sind, dass die Bewegungsrichtung der beweglichen Elemente parallel zur optischen Achse des optischen Moduls verläuft, einschließt.

Dies ermöglicht einen einfachen konstruktiven Aufbau des optischen Moduls, eine höhere Genauigkeit bei der Fokussierung, verkürzte Fokussierzeiten, geringere Herstellungskosten sowie verringerte Betriebsgeräusche.

In einigen Varianten des vorschlagsgemäß ausgeführten optischen Moduls können die Stirnseiten die piezoelektrischen Platten als Führungsnuten ausgeführt werden, die dadurch die beweglichen Elemente so fixieren, dass die optischen Achsen der aufgeführten optischen Linsengruppen bei ihrer Verschiebung innerhalb des Bereichs der Brennweite des optischen Moduls sich in Koinzidenz befinden.

Dies ermöglicht eine gleichmäßig hohe Auflösung des optischen Moduls über die gesamte Brennweite.

Außerdem können in anderen Varianten des optischen Moduls die Stirnseiten der piezoelektrischen Platten als ebene Flächen ausgeführt sein, und jede der optischen Linsengruppen kann ein oder zwei Führungselemente aufweisen, die jede der optischen Linsengruppen so fixieren, dass die optischen Achsen bei ihrer Verschiebung innerhalb des Bereichs der Brennweite des optischen Moduls sich in Koinzidenz befinden.

Dies ermöglicht es, den Herstellungsaufwand der Ultraschallmotoren zu senken, wodurch auch die Kosten der mit solchen Ultraschallmotoren ausgestatteten optischen Module sinken.

Im vorschlagsgemäß ausgeführten optischen Modul können die Ultraschallmotoren an diametral gegenüberliegenden Seiten der optischen Achse des Moduls angeordnet sein.

Außerdem können die Ultraschallmotoren auf einer Seite der optischen Achse des Moduls angeordnet sein.

Die eine als auch die andere Variante erweitert die konstruktiven Möglichkeiten des vorgeschlagenen Moduls.

In allen Varianten des vorschlagsgemäß ausgeführten optischen Moduls kann die elektronische Steuereinheit aus zwei selbsterregenden Generatoren zur unabhängigen und gleichzeitigen Anregung der Ultraschallmotoren bestehen. Dabei wird die generierte Frequenz jedes der selbsterregenden Generatoren durch die Arbeitsresonanzfrequenz des an ihm angeschlossenen Motors vorgegeben. Jeder der selbsterregenden Generatoren kann sowohl mit einen Leistungsverstärker als auch einem Rückkopplungselement mit einem Rückkopplungskreis und einem Schalter zum Richtungswechsel der beweglichen Teile ausgestattet sein.

Außerdem kann die elektronische Steuereinheit gegebenenfalls auch nur einen selbsterregten Generator für die abwechselnde unabhängige Erregung der zwei mit ihm verbundenen Motoren, die mit einem Leistungsverstärker, einem Rückkopplungselement mit einem Rückkopplüngskreis als auch einem Schalter zum Richtungswechsel der beweglichen Teile ausgestattet sein können, aufweisen.

Dies ermöglicht es, die elektronische Steuereinheit zu vereinfachen und damit preiswerter herzustellen.

In den selbsterregenden Generatoren der elektronischen Steuereinheiten kann der Schalter zum Richtungswechsel als zweipoliger Schalter ausgeführt sein, wobei ein Pol mit der entsprechenden Anregungselektrode des entsprechenden Ultraschallmotors und der andere über ein Rückkopplungselement und einen Leistungsschalter eines Leistungsverstärkers mit der gemeinsamen Motorelektrode verbunden ist, wobei der Steuereingang des Leistungsschalters über den Rückkopplungszweig mit dem Rückkopplungselement verbunden ist, und zwar an der Stelle, wo er mit dem Pol des Schalters zum Richtungswechsel verbunden ist.

Dies ermöglicht es, die elektrische Schaltung des selbsterregenden Generators zu vereinfachen.

In verschiedenen Varianten des vorschlagsgemäß aufgebauten optischen Moduls kann mindestens eine optische Linsengruppe mechanisch mit ihrem Positionsgeber gekoppelt sein, dessen Ausgang mit der elektronischen Steuereinheit verbunden ist.

Dies ermöglicht es, die Positioniergenauigkeit dieser optischen Linsengruppe zu erhöhen.

Der Positionsgeber für die optische Linsengruppe kann als Linearpotentiometer ausgeführt werden, dessen Schleifer mechanisch mit dem beweglichen Motorelement oder mit der optischen Linsengruppe verbunden ist.

Dies vereinfacht die konstruktive Ausführung des optischen Moduls.

Außerdem kann der Positionsgeber für die optische Linsengruppe als Halbleiter-Tensosensor ausgeführt werden, der mit dem elastischen Weg-Kraft-Wandler gekoppelt ist, der seinerseits mechanisch mit dem beweglichen Motorelement oder mit einer optischen Linsengruppe verbunden ist.

Dies erhöht die Positioniergenauigkeit der optischen Linsengruppe.

In einigen Varianten des vorgeschlagenen Moduls kann die elektronische Steuereinheit eine Recheneinheit zur relativen Lagebestimmung der optischen Linsengruppen enthalten, die an die Positionsgeber der optischen Linsengruppen angeschlossen ist und deren Informationsausgänge mit den Steuereingänge eines oder beider selbsterregender Generatoren verbunden sind.

Dies erleichtert den Steueralgorithmus.

Die elektronische Steuereinheit kann zur Positionierung der optischen Linsengruppen eine digitale Steuereinheit mit einem Zoom-Eingang und einem Fokus-Eingang enthalten, deren Ausgänge mit den Steuereingängen eines oder beider selbsterregender Generatoren verbunden sind.

Dies erweitert die funktionellen Einsatzmöglichkeiten des optischen Moduls.

Vorteilhafte Ausführungen und Aspekte der vorliegenden Erfindung ergeben sich aus der nachfolgenden Beschreibung bevorzugter Ausführungsbeispiele anhand der Figuren. Von diesen zeigen:
- Fig. 1: optisches Modul mit zweiseitig angeordneten Ultraschallmotoren,
- Fig. 2: optisches Modul mit einseitig angeordneten Ultraschallmotoren,
- Fig. 3: optisches Modul mit Führungen,
- Fig. 4: Ausführungsbeispiel des Ultraschallmotors 9,
- Fig. 5: Ausführungsbeispiel des Ultraschallmotors 10,
- Fig. 6: Anschlussschema Ultraschallmotor mit Anregungsquelle,
- Fig. 7: Abbildungen zur Erläuterung des Funktionsprinzips des Ultra- schallmotors,
- Fig. 8: Ausführungsbeispiel für eine elektrische Schaltung des optischen Moduls 1,
- Fig. 9: Ausführungsbeispiel für eine elektrische Schaltung des selbster- regenden Generators 36,
- Fig. 10: elektrisches Schaltbild der elektronischen Steuereinheit 50 mit einem selbsterregenden Generator 36,
- Fig. 11: Ausführungsbeispiel eines Positionsgebers,
- Fig. 12: Ausführungsbeispiel eines Positionsgebers,
- Fig. 13: Ausführungsbeispiel der elektrischen Schaltung des optischen Moduls 1 mit einer Recheneinheit 80 zur relativen Lagebestim- mung der optischen Linsengruppen 2, 4,
- Fig. 14: Elektrische Steuereinheit 50 mit einer digitalen Steuereinheit 82,
- Fig. 15: Ausführungsbeispiele der Anordnung des optischen Moduls 1 in Gerätegehäusen.

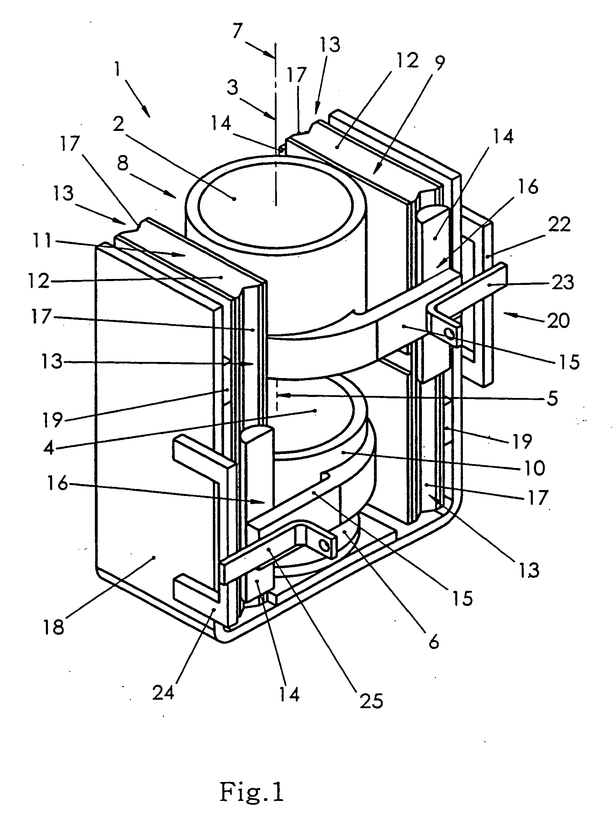

Das optische Miniaturmodul 1 (Fig. 1) besteht aus der fokussierende optischen Linsengruppe 2 mit ihrer optischen Achse 3, der Zoom-Linsengruppe 4 mit ihrer optischen Achse 5 sowie einem fotoelektrischen Abbildungssensor 6. Die beiden optischen Linsengruppen 2, 4 sind so angeordnet, dass ihre optischen Achsen 3 und 5 zusammenfallen und zusammen die optische Achse 7 des optischen Moduls 1 bilden.

Die optische Linsengruppe 2 ist durch einen Träger 8 mechanisch mit einem ersten Ultraschallmotor 9 verbunden. Die optische Linsengruppe 4 ist durch einen Träger 10 mechanisch mit einem zweien Ultraschallmotor 11 verbunden.

Zusammen bilden die beiden Ultraschallmotoren 9, 11 den Antrieb für das optische Modul 1.

Die beiden Ultraschallmotoren 9 und 11 bestehen aus einer piezoelektrischen Platte 12 mit an die gegenüberliegenden Seitenflächen 13 angepressten Friktionselementen 14. Elastische Anpresselemente 15, die die Friktionselemente 14 an die Seitenflächen 13 anpressen, sind Teil der Träger 8, 10. Zusammen mit den Anpresselementen 15 bilden die Friktionselemente 14 bewegliche Elemente 16 der Ultraschallmotoren 9, 11.

Jede der Seitenflächen 13 der piezoelektrischen Platte 12 kann mit Führungsnuten 17 versehen sein, in denen die Friktionselemente 14 angeordnet sind. Die piezoelektrischen Platten 12 sind mit Hilfe der schalldämmenden Unterlagen 19 so in einem U-förmigen Gehäuse 18 befestigt, dass dadurch die Bewegungsrichtung der beweglichen Elemente 16 der Ultraschallmotoren 9, 11 parallel zur optischen Achse 7 des optischen Moduls 1 gewährleistet wird. Bei dem in Fig. 1 dargestellten optischen Modul 1 sind die Ultraschallmotoren 9, 11 an diametral gegenüberliegenden Seiten zur optischen Achse 7 des optischen Moduls 1 angeordnet.

Jede der Linsengruppen 2, 4 kann einen Positionsgeber 20 bzw. 21 aufweisen, die dem fotoelektrischen Abbildungssensor 6 zugeordnet sind. Jeder der Positionsgeber 20 und 21 besitzt jeweils ein feststehendes Teil 22 bzw. 24 und ein bewegliches Teil 23 bzw. 25.

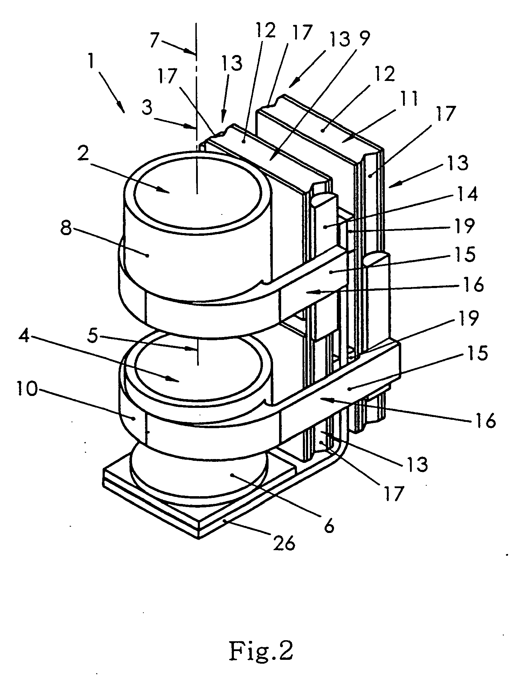

Fig. 2 zeigt ein Ausführungsbeispiel des optischen Moduls 1, bei dem die UItraschallmotoren 9 und 11 in einem L-förmigen Gehäuse 26 so angeordnet sind, das sie sich beide auf der gleichen Seite der optischen Achse des Moduls 1 befinden.

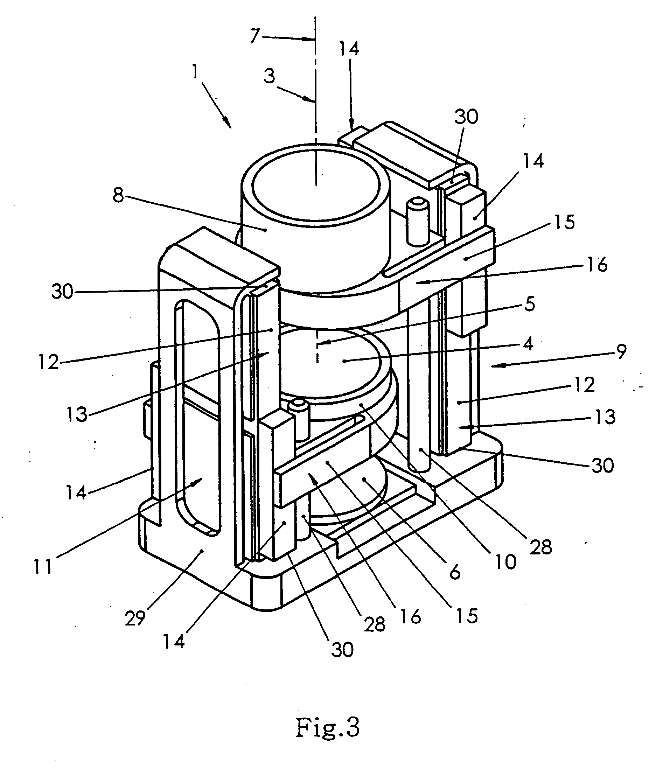

Fig. 3 zeigt ein Ausführungsbeispiel des optischen Moduls 1, in dem die Seitenflächen 13 der piezoelektrischen Platten 12 als ebene Oberflächen 27 ausgeführt sind. In dieser Ausführung ist das optische Modul 1 mit zusätzlichen Führungsstangen 28 ausgestattet. In dieser Variante werden die piezoelektrischen Platten 12 durch das schallgedämpfte Gehäuse 29 mittels ihrer Stirnseiten 30 festgehalten. Das Gehäuse ist zur Schalldämmung aus einem Kunststoff mit niedriger mechanischer Güte gefertigt.

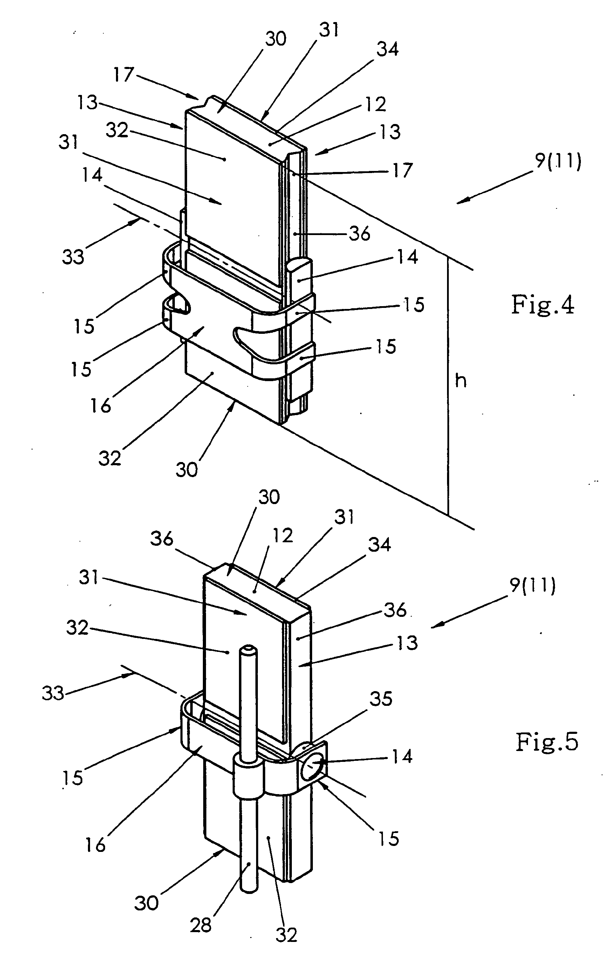

Fig. 4 und 5 zeigen zwei weitere Ausführungsvarianten von Ultraschallmotoren mit dem erfindungsgemäßen optischen Modul 1. Dabei besteht jeder der Ultraschallmotoren aus einer Piezokeramik oder aus einem piezoelektrischen Kristall.

In beiden betrachteten Varianten sind auf einer der größeren Seiten 31 der Platte 12 zwei rechteckige Anregungselektroden 32 aufgebracht. Die Elektroden 32 sind auf der Seite 31 symmetrisch zur längs verlaufenden Symmetrieachse 33 angeordnet. Auf der zweiten größeren Seite der Platte 12 ist eine durchgehende gemeinsame Elektrode 34 aufgebracht. Auch eine andere Anordnung der Anregungselektroden 32 und der gemeinsamen Elektrode 34 ist denkbar. So kann z.B. die piezoelektrische Platte 12 in Vielschichtstruktur ausgeführt werden, wobei die Anregungselektroden und die gemeinsame Elektrode wechselseitig angeordnet sind (in der Zeichnung nicht dargestellt).

An die Seitenflächen 13 der Platten 12 werden die Friktionselemente 14 angepresst. Bei dem in der Fig. 4 gezeigten Motor sind die Seitenflächen 13 als Führungsnuten 17, in denen die Friktionselemente 14 angeordnet sind, ausgeführt. Die Führungsnuten 17 können sowohl eine runde, dreieckige als auch jede andere beliebige Form aufweisen. Die Fig. 5 zeigt einen Motor, bei dem die Seitenfläche 13 als ebene Oberfläche 27 ausgeführt ist.

Die Friktionselemente 14 können als zylindrische Stäbe (in der Zeichnung nicht dargestellt), halbzylindrische Stäbe (Fig. 1, 2, 4), rechteckige Stäbe (Fig. 3), dreieckige Stäbe (in der Zeichnung nicht dargestellt) oder auch als Halbkugeln 35 (Fig. 5) ausgeführt werden. Als Material zur Herstellung der Friktionselemente 14 kann Stahl, Oxidkeramik, Metallkeramik oder ein harter abriebfester Kunststoff verwendet werden.

Bei jedem der Ultraschallmotoren 9 und 11 ist die Oberfläche der piezoelektrischen Platte 12, die sich mit dem Friktionselement 14 in Kontakt befindet, als Friktionsoberfläche 36 (Fig. 4, 5) ausgestaltet, die den Reibkontakt zwischen der Platte 12 und dem Friktionselement 14 gewährleistet. Als Friktionsoberfläche 36 kann auch allein die Oberfläche der Piezokeramik oder des piezoelektrischen Kristatts dienen. Zusätzlich kann auf die sich in Kontakt mit dem Friktionselement 14 befindende piezokeramische Platte 12 eine abriebfeste Schicht als dünner Überzug aus einem abriebfesten Material wie z.B. Ti, Cr, TiN, TiCN, CrN, TiAIN, ZrN, TiZrN, TiCrN oder auch einem anderen geeigneten Material aufgetragen werde, dessen Oberfläche in diesen Fall die Friktionsoberfläche der Platte 12 bildet.

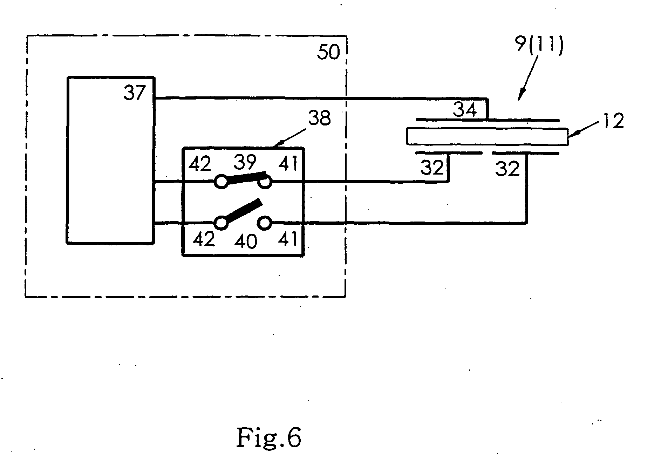

Fig. 6 zeigt das Anschlussschema von Ultraschallmotor 9 bzw. 11 mit einem selbsterregenden Generator 37, der den Motor antreibt. Die Schaltung schließt einen Schalter zum Richtungswechsel 38 ein, bestehend aus zwei Schaltern 39 und 40 mit Polen 41 und 42.

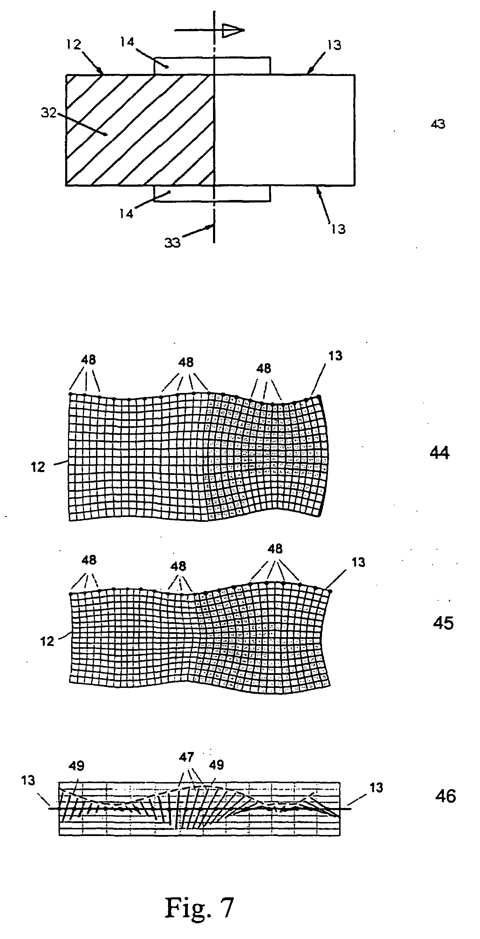

Fig. 7 zeigt die asymmetrische Form der in der Platte 12 generierten akustischen Welle. Position 43 zeigt die piezoelektrische Platte 12 mit einer Anregungselektrode 32. Die Positionen 44 und 45 zeigen zwei Bilder der verformten Platte 12 jeweils zeitverschoben um eine halbe Schwingungsperiode. Die Position 46 zeigt die Bewegungsbahn 47 der Materialpunkte 48 der Seitenflächen 13 der piezoelektrischen Platte 12. Die Linie 49 stellt die Hüllkurve der Bewegungsbahn 47 dar.

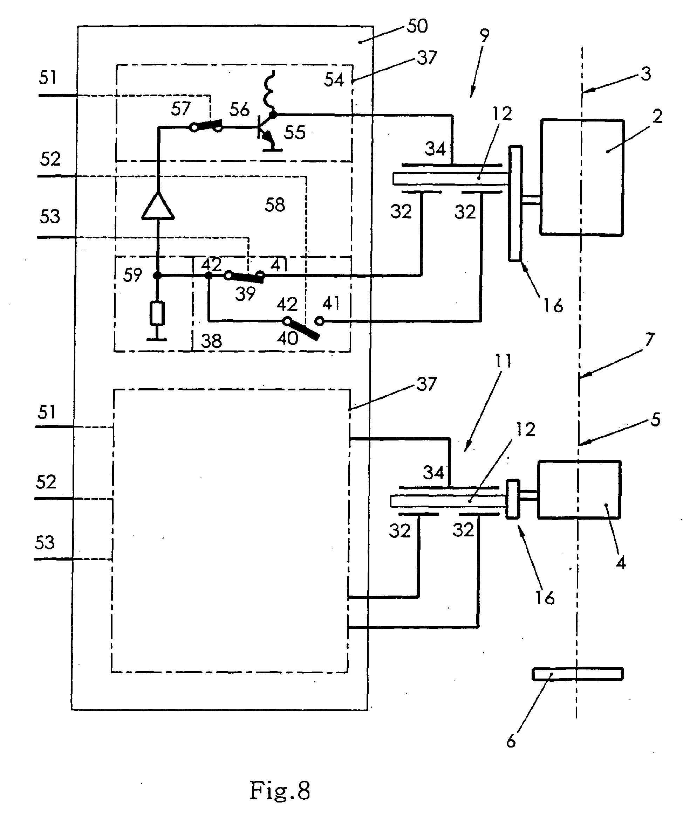

Fig. 8 zeigt die elektrische Schalung des optischen Moduls 1 mit der elektronischen Steuereinheit 50 und zwei selbsterregenden Generatoren 37. Die elektronische Steuereinheit 50 hat drei Steuereingänge 51, 52, 53. Jeder der selbsterregenden Generatoren 37 besteht aus einem Leistungsverstärker 54 mit einem Ausschalter 55 und einem Steuereingang 56; einem Ausschalter 57, dem Rückkopplungszweig 58, einem Rückkopplungselement 59 und dem Schalter 38 zum Richtungswechsel.

In jedem der selbsterregenden Generatoren 37 kann der Schalter zum Richtungswechsel 38 in Form der zwei Schalter 39 und 40 mit den Polen 41 und 42 ausgeführt werden, wobei der Pol 41 mit der entsprechenden Elektrode 32 des Ultraschallmotors (9, 11) und der Pol 42 über das Rückkopplungselement 59 und den Ausschalter 55 mit der gemeinsamen Elektrode 34 des Motors verbunden ist. Dabei ist der Steuereingang 56 des Ausschalters 55 über den Rückkopplungszweig 58 mit dem Rückkopplungselement 59 verbunden, und zwar an der Stelle, wo der Pol 42 mit dem des Schalters zum Richtungswechsel 38 verknüpft ist.

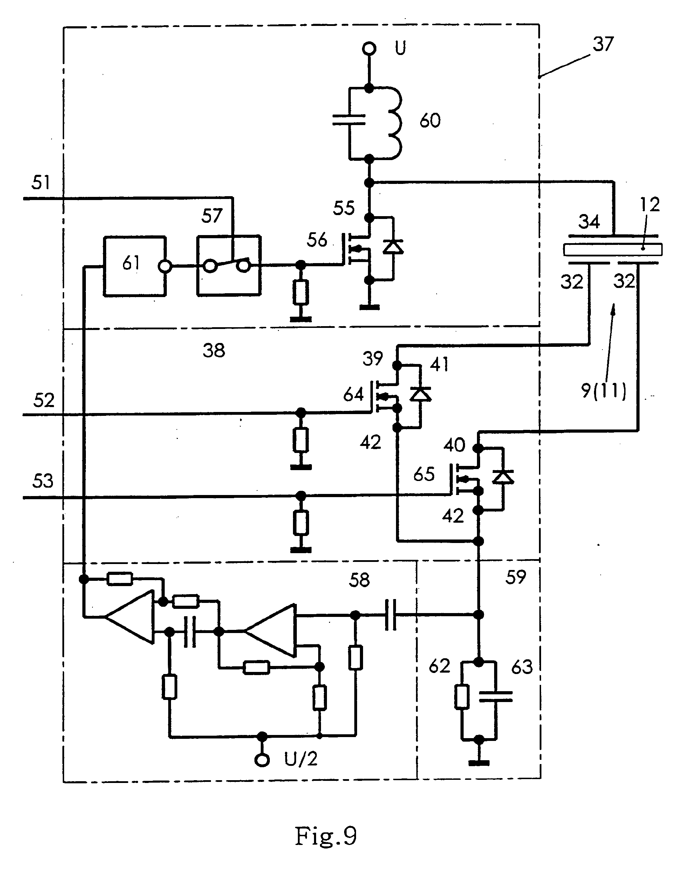

Fig. 9 zeigt eine der möglichen Varianten der elektrischen Schaltung des selbsterregenden Generators 37. In dieser Ausführungsvariante besteht der Leistungsverstärker 54 aus einer Konstantstromquelle 60 des als Transistorwechselschalter ausgeführten Ausschalters 55, dessen Steuereingang 56 über den elektronischen Schalter 57 mit einem Treiber 61 verbunden ist. Der Rückkopplungszweig 58. ist ein Filter - ein Phasenschieber. Das Rückkoppelelement 59 besteht aus einem Parallelwiderstand 62 und einem Kondensator 63. Der Schalter 38 zum Richtungswechsel besteht aus den zwei Transistorschaltern 39 und 40 mit Steuereingängen 64 und 65.

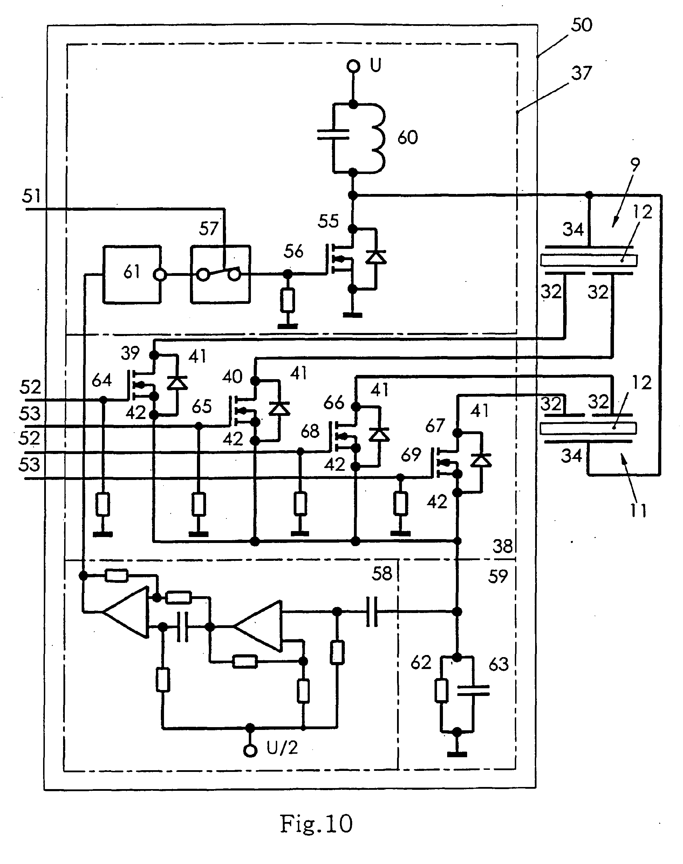

Fig. 10 zeigt die elektrische Schaltung des optischen Moduls 1 mit einem selbsterregenden Generator 37 und der elektronischen Steuereinheit 50. In dieser Variante besteht der Schalter zum Richtungswechsel aus vier zweipoligen Transistorschaltern 39, 40 und 66, 67 mit den Steuereingängen 64,65,68 und 69. Diese Schalter sind mit den Motoren 9 und 11 verbunden.

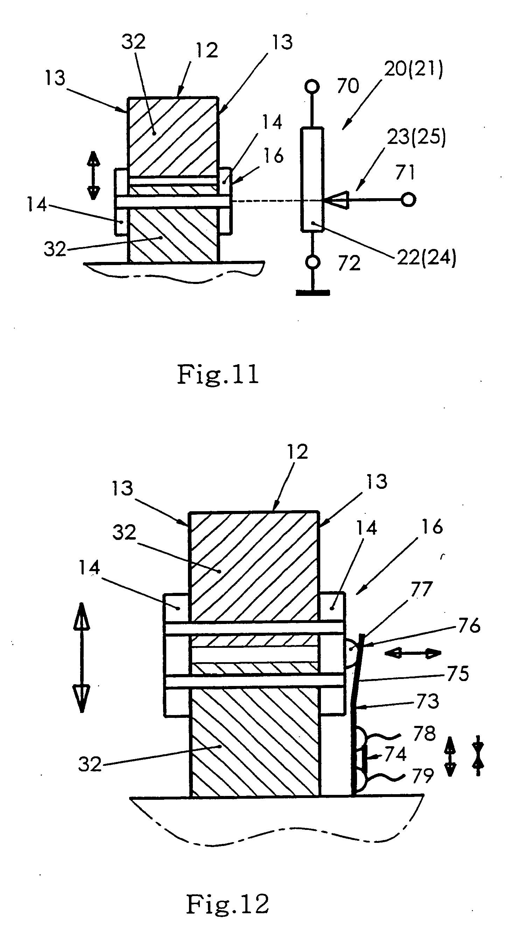

Im vorgeschlagenen optischen Modul kann mindestens eine der optischen Linsengruppen 2, 4 mechanisch mit ihrem Positionsgeber 21 für die Lagebestimmung zum fotoelektrischen Abbildungssensor 6 verbunden sein. Als Positionsgeber 21 können die in Fig. 1 und 11 angegebenen linearen Schieberegler verwendet werden. Dabei wird das Basisteil des Potentiometers 22 oder 24 auf dem Gehäuse 18 und der Widerstandsabgriff 23, 25 am Träger 8, 10 befestigt, d.h. sie werden mechanisch mit dem beweglichen Motorteil und der entsprechenden optischen Linsengruppe verbunden. Der als Potentiometer ausgeführte und in Fig. 11 dargestellte Positionsgeber 21 hat drei elektrische Ausgänge 70, 71 und 72.

Fig. 12, zeigt einen Piezowiderstandsgeber 73. Er besteht aus einem Halbleiter-Tensosensor 74, der mit einem Weg-Kraft-Wandler 75 verbunden ist, dessen bewegliches Ende 76 auf einen Nocken 77 einwirkt, der sich auf dem beweglichen Element 16 des Ultraschallmotors 9 oder 11 befindet. Der Halbleiter-Tensosensor 74 hat zwei elektrische Ausgänge 78 und 79. Er kann als dünner, mit dem Wandler 75 verklebter Germaniumstab ausgeführt werden.

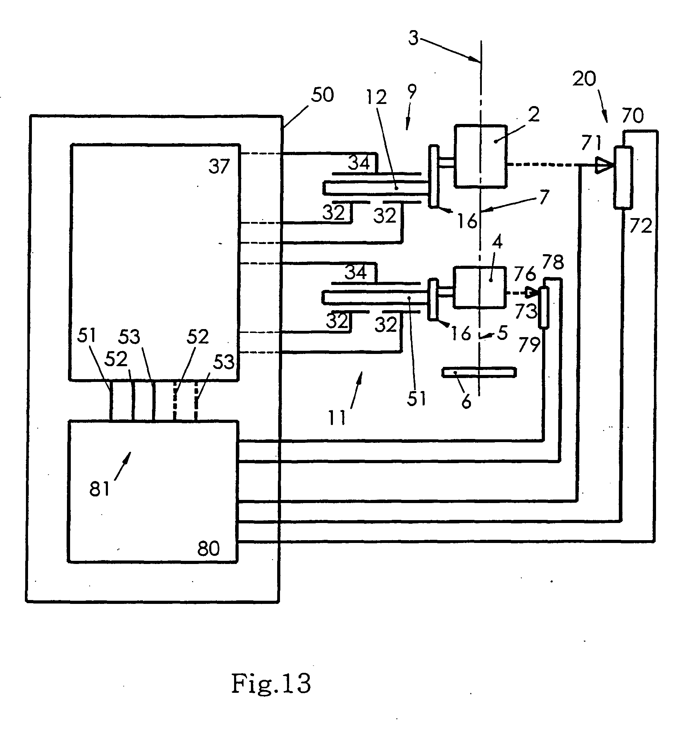

Fig. 13 zeigt die elektrische Schaltung des Moduls 1, bei dem die elektronische Steuereinheit 50 eine Recheneinheit 80 zur relativen Lagebestimmung für die optischen Linsengruppen 2 und 4 enthält, deren Informationsausgänge 81 mit den Steuereingängen 51, 52, 53 beider oder eines der selbsterregenden Generatoren 37 verbunden sind.

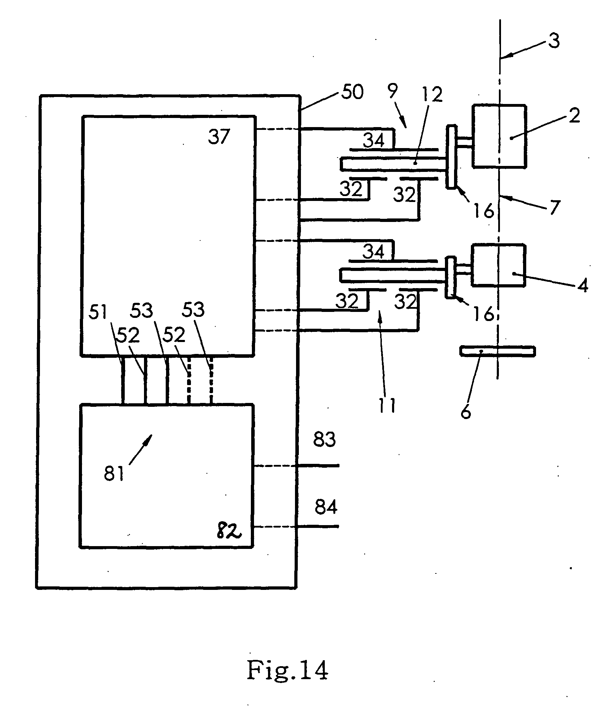

Fig. 14 zeigt die elektrische Schaltung des Moduls 1, bei dem die elektronische Steuereinheit 50 eine digitale Steuereinheit 82 zur Positionierung der optischen Linsengruppen mit einem Zoom-Eingang 83 und einem Fokus-Eingang 84 aufweist, deren Ausgänge 81 mit den Steuereingängen 51, 52, 53 beider oder eines der selbsterregenden Generatoren 37 verbunde sind.

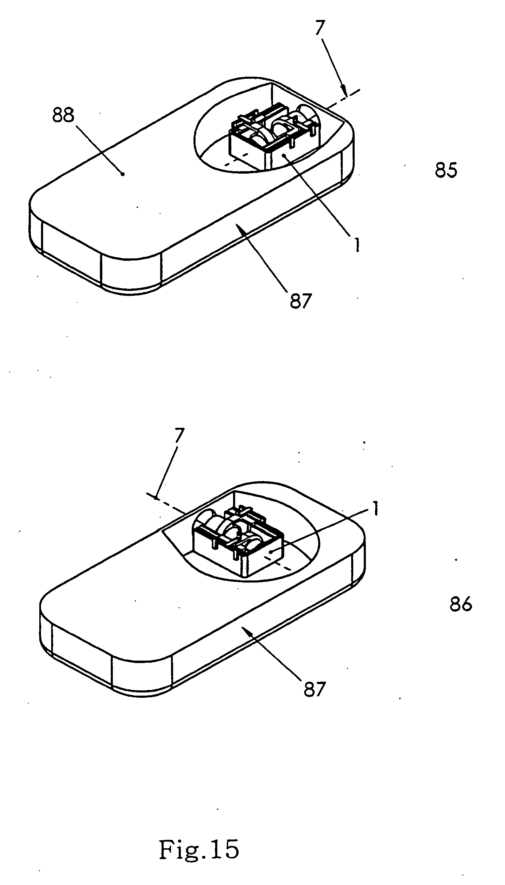

In der Fig. 15 zeigen die Positionen 85 und 86 Beispiele zur Anordnung des optischen Moduls 1 in einem Gehäuse 87 des Gerätes, wobei die optische Achse 7 parallel zur Oberfläche 88 einer Stirnseite verläuft.

Beim Einschalten des optischen Moduls 1 gelangt von der elektronischen Steuereinheit 50 (Fig. 6, Schalter 39 geschlossen, Schalter 40 offen) ein Wechselspannungssignal auf die Anregungselektrode 32 der piezoelektrischen Platte 12 des Ultraschallmotors 9 oder 11 (Fig. 4, 5), dessen Frequenz gleich der Arbeitsfrequenz des Motors ist. Diese Spannung regt den Ultraschallmotor 9 oder 11 an, wodurch das bewegliche Element 15 eine Bewegung erfährt.

Der Ultraschall motor funktioniert folgendermaßen. Die auf den Ultraschallmotor 9 bzw. 11 gegebene Spannung regt in der Platte 12 eine akustische Schwingung an, bei der sich in der Platte 12 eine asymmetrische akustische Stehwelle bildet.

Die Zeichnungen in Fig. 7 erläutern die Form dieser Wellen. Die Positionen 44 und 45 in der Fig. 7 zeigen zwei Beispiele verformter Platten 12. Die Abbildungen zeigen eine Verschiebung um eine halbe Periode. Die Position 46 zeigt die Bewegungsbahn 47 der Materialpunkte 48 auf der Seitenfläche 13 der Platte 12, wobei die Linie 49 die Verbindungslinie der Bewegungsbahn 47 darstellt. Die Bewegungsbahn 47 und die Form der Verbindungslinie 49 zeigen, dass die angeregte Stehwelle asymmetrisch bezogen auf die mittig durch die größere Seite der Platte 12 verlaufende Symmetrieachse 33 ist. Die auftretende Asymmetrie ist dadurch bedingt, dass die Bewegungsbahn 47 eine überwiegende Neigung von der Elektrode 32 weg aufweist.

Diese auftretende Neigung führt dazu, dass auf die an die Seitenflächen 13 der Platte 12 angepressten Friktionselemente 14 eine Kraft einwirkt, und zwar in der in Fig. 12 mit Pfeil angegebenen Richtung der Elektrode 12. Die dabei auftretende Kraft ist proportional zur, angelegten Spannung. Bei ausreichender Größe der anliegenden Spannung bewegen sich die Friktionselemente 14 längs zu den Seitenflächen 13 der Platte 12. Gemeinsam mit den Friktionselementen bewegt sich auch das bewegliche Element 16 mit dem auf ihr befestigten optischen Linsengruppe 2 und 4.

Durch Öffnen des Schalters 39 und Schließen des Schalters 40 wird die elektrische Spannung auf die zweite Elektrode 32 der Platte 12 gelegt. Das bewirkt eine Reversion der Bewegung, worauf das Element 16 sich in umgekehrter Richtung zu bewegen beginnt.

Der maximal mögliche Abstand z, um den die optische Linsengruppe 4 verschoben werden kann, wird durch die Höhe h (Fig. 4) der piezoelektrischen Platte 12 begrenzt und beträgt etwa die halbe Plattenhöhe. Dieser Abstand bestimmt die maximale und minimale Brennweite des Moduls 1. Der Abstand f, um den die optische Linsengruppe 4 verschoben werden kann, wird durch die Scharfeinstellung des Moduls 1 auf das Objekt bestimmt und beträgt etwa 0,1 z.

In den in Fig. 1, 2 gezeigten Varianten des optischen Moduls 1 werden Ultraschallmotoren (Fig. 4) eingesetzt, deren Seitenflächen 13 Führungsnuten 17 aufweisen. Die Nuten 17 sind so ausgeführt, dass die Bewegung der Friktionselemente 14 geradlinig und längs zu den Seitenflächen 13 erfolgt. Die Geradlinigkeit der Bewegungsbahn wird durch die Herstellungsgenauigkeit der Führungsnuten 17 bestimmt. Bei einer Verschiebung von z=5 mm kann die Abweichung der Bewegungsbahn q von der Geradlinigkeit +/- 0,005 mm betragen.

Durch die Anordnung der piezoelektrischen Platten 12 in einem U-förmigen (oder L-förmigen) Gehäuse 18 ist es möglich, die optischen Achsen 3 und 5 genau zueinander in Koinzidenz zu bringen. Dadurch ist es bei einer Verschiebung der optischen Linsengruppe 2 und 4 im Bereich der Brennweitenänderung des optischen Moduls 1 möglich, ihre optischen Achsen 3 und 5 in Koinzidenz zu halten. Die Abweichung von der genauen Koinzidenz der optischen Achsen ist arctg q/s.

Fig. 3 zeigt eine Variante des optischen Moduls 1 mit stabförmigen Führungen 28, die gewährleisten, dass die optischen Achsen 3 und 5 der optischen Linsengruppen 2 und 4 in Koinzidenz gehalten werden. Eine solche Konstruktion des optischen Moduls hat eine etwas geringere Genauigkeit hinsichtlich der Koinzidenz der optischen Achsen 3 und 5. Der Vorteil der Konstruktion besteht jedoch in den geringeren Fertigungskosten, da keine Führungsnuten hergestellt werden müssen.

Die elektronische Steuereinheit 50 des optischen Moduls 1 kann aus den zwei zur gleichzeitigen unabhängigen Erregung der Motoren 9 und 11 vorgesehenen selbsterregeriden Generatoren 37 bestehen. Die beiden Generatoren 37 sind mit den Motoren 9 und 11 verbunden, die durch ihre Arbeitsresonanzfrequenz die Anregungsfrequenz der Generatoren bestimmen. Der Schalter 38 zum Richtungswechsel, der aus den Schaltern 39 und 40 besteht, ist derart mit dem Rückkopplungselement 59 verbunden, dass der durch die piezoelektrische Platte 12 fließende Strom ein Rückkopplungssignal am Rückkopplungselement hervorruft. Diese Spannung gelangt über den Rückkopplungszweig 58 auf den Steuereingang 56 des Ausschalters 55.

Fig. 9 zeigt die konkrete elektrische Schaltung des selbsterregenden Generators 37. In der Schaltung besteht die Rückkopplung 59 aus dem Parallelwiderstand 62 und dem Kondensator 63. Der Wert des Blindwiderstands des Kondensators 63 bei der Arbeitsfrequenz wird so ausgewählt, dass er bedeutend kleiner als der des Widerstands ist. Deshalb ist das an der Rückkopplung 59 auftretende Rückkopplungssignal um etwa 90° phasenverschoben, bezogen auf den durch die piezoelektrische Platte 12 fließenden Strom.

Aus der Rückkopplungsspannung wird die erste Harmonische gebildet und verstärkt. Die Frequenz der Harmonischen entspricht der Arbeitsfrequenz der Ultraschallmotoren 9 und 11. Die Spannung wird so verstärkt, dass der Rückkoppelfaktor im offenen Zustand des selbsterregenden Generators größer eins ist. Durch den Rückkopplungszweig 58 wird die Rückkopplungsspannung so verschoben, dass die gemeinsame Phasenverschiebung im offenen Zustand des selbsterregenden Generators bei der Arbeitsfrequenz des Ultraschallmotors gleich null ist. Ist der Ausschalter 57 geschlossen, schwingt der selbsterregende Generators 37 eigenständig auf der Frequenz an, die durch den Teil der Platte 12 bestimmt wird, deren Elektrode 32 über den Umschalter 38 mit dem Rückkopplungselement 59 verbunden ist. In der Platte 12 entsteht eine asymmetrische Stehwelle - siehe Fig. 7. Bei einsetzender Selbsterregung des Generators 37 beginnt das bewegliche Element 16 sich von der angeschlossenen Elektrode weg zu bewegen. Wird der Ausschalter 57 geöffnet, führt dies zum Abbruch der Selbsterregung und zum Stopp der Bewegung des beweglichen Elementes 16.

Durch Anlegen einer Steuerspannung an die Eingänge 51, 52, 53 ist es möglich, die entsprechenden Ultraschallmotoren unabhängig ein- bzw. auszuschalten und unabhängig die Bewegungsrichtung des beweglichen Elementes 16 des entsprechenden Ultraschallmotors 9, 11 zu ändern.

Fig. 10 zeigt die elektrische Schaltung des optischen Moduls 1, bei dem die elektronische Steuereinheit 50 aus dem selbsterregenden Generator 37 besteht. Wird ein Schalter des selbsterregenden Generators 37 geschlossen, wird die entsprechende Elektrode 32 des entsprechenden Motors 9 oder 11 angesteuert. In dieser Ausführungsvariante des Moduls 1 ist nur ein abwechselnder Betrieb der Motoren 9 und 11 möglich.

Das ausführungsgemäße optische Modul 1 kann aus einem Positionsgeber 20, einer Linsengruppe 2 und einem Positionsgeber 21 für die Linsengruppe 4 (Fig. 1) bestehen. Die Geber können als Schieberegler (Fig. 11) ausgeführt sein, deren Abgriffe 23 und 25 die Position der optischen Linsengruppen 2 und 4 in Bezug zum fotoelektrischen Abbildungssensör 6 bestimmen. Wird an den Ausgang 70 des Gebers 20 oder 21 eine Gleichspannung angelegt, erscheint am Ausgang 71 eine elektrische Spannung, deren Größe direkt von der Position des Gebers 20 und 21 abhängt.

Der Positionsgeber kann auch (siehe Fig. 12) als Piezowiderstandsgeber 73 ausgeführt Solch ein Geber besteht aus dem Weg-Kraft-Wandler 75. Bei Verschiebung des beweglichen Elementes 16 wirkt der Nocken 77 auf das bewegliche Ende 76 des Wandlers ein, wodurch sich sein Ende senkrecht zur Seitenfläche 13 der Platte 12 auf die in Fig. 12 mit Pfeilen angegebene Art und Weise bewegt. Eine solche Anordnung bewirkt eine Stauchung bzw. Dehnung des Halbleiter-Tensosensors 74, was zu einer Verlängerurig bzw. Verkürzung des aktiven Widerstands führt.

Durch das Einbinden der Ausgänge 78, 79 des Halbleiter-Tensosensors 74 in einen der Zweige der Widerstandsbrücke ist es möglich, aus der Brückenverstimmung eindeutig die Lage der Linsengruppen 2 und 4 in Bezug zum fotoelektrischen Abbildungssensor 6 zu bestimmen.

Durch die Verwendung der Geber 20, 21 und 73 im ausführungsgemäß gestalteten optischen Modul 1 ist eine genaue Positionierung der optischen Linsengruppen 2 und 4 in der geforderten Position möglich.

Mit der in Fig. 13 gezeigten elektrischen Schaltung einer möglichen Ausführung des optischen Moduls 1 wird die Linsengruppe 4 mit dem Ultraschallmotor 11 und der Videosucheinrichtung (in der Abb. nicht angegeben) in der Lage der gewünschten Objektvergrößerung positioniert. Der Geber 21 erzeugt an seinem Ausgang 76 ein Signal, welches der Position der Linsengruppe 4 entspricht. Die Recheneinheit 80 bestimmt aus dem Signal die erforderliche Position für die Linsengruppe 2. Durch den Ultraschallmotor 9 wird die Linsengruppe 2 in diese Stellung gebracht.

Auch andere Ausführungen zur Steuerung des optischen Moduls 1 sind, wie bereits weiter oben erwähnt, denkbar. So kann die elektronische Steuereinheit 50 z.B. aus einer digitalen Steuereinheit 82 bestehen. An dem Zoom-Eingang 83 der elektronischen Steuereinheit 50 wird ein Signal der Steuereinheit für die Objektvergrößerung durch das Modul 1 gelegt. Dieses Signal steuert den Motor 11, der die Zoom-Linsengruppe 4 bewegt. An den Zoom-Eingang 84 wird ein Signal gelege, das den Motor 9 steuert. Dieser Motor bewegt die fokussierende Linsengruppe 2. Beide Signale werden von einer Prozessoreinrichtung (in der Zeichnung nicht abgebildet) generiert, die die vom fotoelektrischen Abbildungssensor des Moduls 1 gelieferte Information auswertet.

Das vorgeschlagene optische Modul stellt eine kompakte optische Baugruppe mit äußerst kleinen Abmessungen und integrierten direkt angetriebenen UItraschallinearmotoren dar. So hat z.B. das optische Modul mit einer Zoom-Linsengruppe und einen Verstellweg von 6 mm Abmessungen von 13x7x12 mm. Das Modul kann in den Gehäuse von Geräten so angeordnet werden, dass seine optische Achse 7 senkrecht zur Oberfläche der Stirnseite des Gerätes verläuft. Bei Wunsch nach weiterer Verringerung der Geräteabmessungen kann das vorgeschlagene Modul so im Gerät angeordnet werden, dass seine optische Achse parallel zur Oberfläche 88 seiner Stirnseite verläuft, wie es in der Fig. 15 die Positionen 85 und 86 zeigen.

Das vorgeschlagene optische Modul ermöglicht eine hohe Positioniergenauigkeit der optischen Linsengruppe und deshalb eine hohe Auflösung des Objektivs. Die Anwendung direkt angetriebener Ultraschalllinearmotoren ermöglicht kurze Verstellzeiten der optischen Linsengruppen. So betrug bei einem Prototyp die Verstellzeit des Moduls 0,05 Sekunden. Auf Grund der einfachen Konstruktion sind die Herstellungskosten gering, und das Modul kann in preiswerten Erzeugnissen der Konsumgüterproduktion eingesetzt werden, wie z. B in Handys. Im Betrieb treten keine akustischen Betriebsgeräusche auf, was vorteilhaft für die Nutzung ist.

Bezugsziffern
- 1.: Optisches Modul
- 2.: Fokussierende optische Linsengruppe
- 3.: Optische Achse der optischen Linsengruppe 2
- 4.: Zoom-Linsengruppe 4
- 5.: Optische Achse der optischen Linsengruppe 4
- 6.: fotoelektrischer Abbildungssensor 6
- 7.: Optische Achse des Moduls 1
- 8.: Träger der optischen Linsengruppe 2
- 9.: erster Ultraschallmotor
- 10.: Träger der optischen Linsengruppe 4
- 11.: zweiter Ultraschallmotor
- 12.: Piezoelektrische Platte
- 13.: Seitenfläche der piezoelektrischen Platte 12
- 14.: Friktionselemente
- 15.: elastische Anpresselemente
- 16.: Bewegliche Elemente
- 17.: Führungsnuten
- 18.: U-förmiges Gehäuse
- 19.: Schalldämpfende Unterlage
- 20.: Positionsgeber für die Linsengruppe 2
- 21.: Positionsgeber für die Linsengruppe 4
- 22.: Feststehendes Teil des Gebers 20
- 23.: Bewegliches Teil des Gebers 20
- 24.: Feststehendes Teil des Gebers 21
- 25.: Bewegliches Teil des Gebers 21
- 26.: L-förmiges Gehäuse
- 27.: Ebene Oberfläche der Seite 13
- 28.: Führungsstangen
- 29.: Schalldämpfendes Gehäuse
- 30.: Stirnseite der Platte 12
- 31.: die größeren Seiten der Platte 12
- 32.: Anregungselektroden
- 33.: Symmetrieachse der Seite 31
- 34.: Gemeinsame Elektrode
- 35.: Friktionselement 14 als Halbkugel
- 36.: Friktionsoberfläche
- 37.: Selbsterregender Generator
- 38.: Schalter zum Richtungswechsel
- 39.: Schalter
- 40.: Schalter
- 41.: Pol des Ausschalters
- 42.: Pol des Ausschalters
- 43.: Platte 12 mit einer Elektrode 32
- 44.: Schwingungsbilder der Platte 12
- 45.: Schwingungsbilder der Platte 12
- 46.: Bild der Bewegungsbahn 47
- 47.: Bewegungsbahn
- 48.: Materialpunkte auf der Oberfläche der Seitenfläche 13
- 49.: Hüllkurve der Bewegungsbahn 47
- 50.: Elektronische Steuereinheit
- 51.: Eingang elektronischen Steuereinheit 50
- 52.: Eingang der elektronischen Steuereinheit 50
- 53.: Eingang der elektronischen Steuereinheit 50
- 54.: Leistungsverstärker
- 55.: Ausschalter des selbsterregenden Generators 37
- 56.: Steuereingang des Leistungsschalters für den Ausschalter 55
- 57.: Ausschalter des selbsterregenden Generators 37
- 58.: Rückkopplungszweig
- 59.: Rückkopplungselement
- 60.: Konstantstromquelle
- 61.: Treiber
- 62.: Widerstand als Rückkopplungselement
- 63.: Kondensator als Rückkopplungselement
- 64.: Steuereingang für Schalter 39
- 65.: Steuereingang für Schalter 40
- 66.: Schalter
- 67.: Schalter
- 68.: Steuereingang für den Schalter 66
- 69.: Steuereingang für den Schalter 67
- 70., 71., 72.: Elektrische Ausgänge des Positionsgebers 20, 21
- 73.: Piezowiderstandsgeber
- 74.: Halbleiter-Tensosensor
- 75.: Weg-Kraft-Wandler
- 76.: Bewegliches Ende des Weg-Kraft-Wandlers
- 77.: Nocken
- 78., 79.: Ausgänge des Halbleiter-Tensosensors
- 80.: Recheneinheit zur relativen Lagebestimmung
- 81.: Informationsausgang
- 82.: Digitale Steuereinheit
- 83.: Zoom-Eingang für die digitale Steuereinheit 82
- 84.: Fokus-Eingang für die digitale Steuereinheit 82
- 85., 86.: Positionen mit Beispielen zur Anordnung des Moduls 1 im Gehäuse 87
- 87.: Gehäuse
- 88.: Oberfläche der Gerätestirnseite

## Patentansprüche

1. Objektivbaugruppe (1) mit einer optischen Zoom-Linsengruppe (4) sowie mit einer fokussierenden optischen Linsengruppe (2), deren zusammengesetzte optische Achsen die optische Achse (7) des Objektivs bilden, und mit einem elektrischen Antrieb für beide Linsengruppen,
welcher in Form zweier linearer Ultraschallmotoren (9,11) ausgeführt ist, **dadurch gekennzeichnet, dass** jeder der beiden Ultraschallmotoren als piezoelektrische Platte (12) mit zwei an die gegenüberliegenden Stirnseiten (13) angepressten Friktionselementen (14) besteht, welche zusammen mit den Anpresselementen (15) die beweglichen Elemente der Ultraschallmotoren bilden, wobei jedes der beweglichen Elemente elastisch mit der entsprechenden Linsengruppe verbunden ist und die Ultraschallmotoren so angeordnet sind, dass die Bewegungsrichtung der beweglichen Elemente im wesentlichen parallel zur optischen Achse des optischen Moduls verläuft.

2. Objektivbaugruppe nach Anspruch 1,
**dadurch gekennzeichnet, dass**
die Stirnseiten (13) piezoelektrischen Platten Führungsnuten (17) aufweisen, die die beweglichen Elemente so halten, dass die optischen Achsen (3,5) der genannten Linsengruppen sich bei ihrer Verschiebung innerhalb der Brennweite des optischen Moduls in Koinzidenz befinden.

3. Objektivbaugruppe nach Anspruch 1,
**dadurch gekennzeichnet,**
**dass** die Stirnseiten (13) der piezoelektrischen Platten als ebene Oberflächen ausgeführt sind, wobei jede der optischen Linsengruppen mit einem oder zwei Führungselementen (28) versehen ist, die bewirken, dass die optischen Achsen der optischen Linsengruppen sich bei ihrer Verschiebung innerhalb der Brennweite des optischen Moduls in Koinzidenz befinden.

4. Objektivbaugruppe nach einem der vorangehenden Ansprüche,
**dadurch gekennzeichnet, dass**
die Ultraschallmotoren auf gegenüberliegenden Seiten der optischen Achse des optischen Moduls angeordnet sind.

5. Objektivbaugruppe nach einem der Ansprüche 1 bis 3,
**dadurch gekennzeichnet, dass**
die Ultraschallmotoren auf der gleichen Seite, bezogen auf die optische Achse des optischen Moduls, angeordnet sind.

6. Objektivbaugruppe nach einem der vorangehenden Ansprüche,
**gekennzeichnet durch**
eine integrierte elektronische Steuereinheit (50) für den elektrischen Antrieb.

7. Objektivbaugruppe nach Anspruch 6,
**dadurch gekennzeichnet, dass**
die elektronische Steuereinheit zwei selbsterregende Generatoren (37) zur gleichzeitigen unabhängigen Anregung jedes Motors aufweist, wobei die Arbeitsfrequenz jedes der selbsterregenden Generatoren durch die Arbeitsresonanzfrequenz des an ihm angeschlossenen Motors vorgegeben ist und jeder der selbsterregenden Generatoren einen Leistungsverstärker (54), ein Rückkopplungselement (59) mit einem Rückkopplungszweig (58) sowie einen Schalter (38) zur Richtungsänderung der beweglichen Elemente aufweist.

8. Objektivbaugruppe nach Anspruch 6,
**dadurch gekennzeichnet, dass**
die elektronische Steuereinheit einen selbsterregenden Generator zur unabhängigen abwechselnden Anregung von zwei an ihn angeschlossenen Motoren aufweist, der einen Leistungsverstärker (54), ein Rückkopplungselement (59) sowie einen Schalter (38) zum Richtungswechsel der beweglichen Elemente aufweist.

9. Objektivbaugruppe nach Anspruch 7 oder 8,
**dadurch gekennzeichnet dass**
der oder jeder Schalter (38) zum Richtungswechsel als zweipoliger Schalter (39,40) ausgeführt ist, wobei ein Pol mit der entsprechenden Anregungselektrode (32) des entsprechenden Ultraschallmotors verbunden ist und der andere Pol über das Rückkopplungselement sowie den Leistungsschalter (55) des Leistungsverstärkers mit der gemeinsamen Motorelektrode (34) verbunden ist, wobei der Steuereingang (56) des Leistungsschalters über einen Rückkopplungszweig mit dem Rückkopplungselement (59) verbunden ist, und zwar an der Stelle, wo er mit dem Pol des Schalters (42) zum Richtungswechsel verbunden ist.

10. Objektivbaugruppe nach einem der Ansprüche 6 bis 9,
**dadurch gekennzeichnet, dass**
mindestens eine optische Linsengruppe mechanisch mit einem Positionsgeber (20,21) gekoppelt ist, dessen Ausgang mit der elektronischen Steuereinheit verbunden ist.

11. Objektivbaugruppe nach Anspruch 10,
**dadurch gekennzeichnet, dass**
der Positionsgeber zur Lagebestimmung der optischen Linsengruppe als ein Linearpotentiometer (22,24) ausgeführt ist, dessen Abgriff (23,25) mechanisch mit dem beweglichen Element des Ultraschallmotors oder einer optischen Linsengruppe verbunden ist.

12. Objektivbaugruppe nach Anspruch 10,
**dadurch gekennzeichnet, dass**
der Positionsgeber zur Lagebestimmung der optischen Linsengruppe als Halbleiter-Tensosensor (74) ausgeführt ist, der mit einem elastischen Weg-Kraft-Wandler verbunden ist, welcher mechanisch mit dem beweglichen Element des Ultraschallmotors oder einer Linsengruppe verbunden ist.

13. Objektivbaugruppe nach einem der Ansprüche 10 bis 12,
**dadurch gekennzeichnet, dass**
die elektronische Steuereinheit mit einer Recheneinheit (80) zur Bestimmung der relativen Position der Linsengruppen ausgestattet ist, an die die Positionsgeber der Linsengruppen angeschlossen sind und deren Ausgänge (81) mit den Steuereingängen (51,52,53) eines oder beider selbsterregender Generatoren verbunden sind.

14. Objektivbaugruppe nach einem der Ansprüche 7 bis 13,
**dadurch gekennzeichnet, dass**
die elektronische Steuereinheit mit einer digitalen Steuereinheit (82) zur Positionierung der optischen Linsengruppen versehen ist, die einen Zoom-Eingang mit einem Fokus-Eingang hat und deren Ausgänge mit den Steuereingängen von einem oder beiden selbsterregenden Generatoren verbunden sind.

15. Objektivbaugruppe nach einem der vorangehenden Ansprüche,
**gekennzeichnet durch**
einen fotoelektrischen Abbildungssensor (6) zur Umwandlung der optischen Abbildung in ein elektrisches Signal.

## Claims

1. Objective module (1) comprising an optical zoom lens group (4) and comprising a focusing optical lens group (2) the combined optical axes of which form the optical axis (7) of the objective, and comprising an electric drive for both lens groups which is in the form of two linear ultrasonic motors (9, 11),
**characterized in that**
each of the two ultrasonic motors is realized in the form of a piezoelectric plate (12) having two friction elements (14) which are pressed against the opposite front sides (13) and, together with the press-on elements (15), form the mobile elements of the ultrasonic motors, wherein each of the mobile elements is elastically connected to the corresponding lens group and the ultrasonic motors are arranged in such a way that the direction of motion of the mobile elements extends substantially in parallel to the optical axis of the optical module.

2. Objective module according to claim 1,
**characterized in that**
the front sides (13) of the piezoelectric plates comprise guiding grooves (17) which fix the mobile elements in such a way that the optical axes (3, 5) of the aforementioned lens groups are in coincidence upon their displacement within the focal range of the optical module.

3. Objective module according to claim 1,
**characterized in that**
the front sides (13) of the piezoelectric plates are realized as flat surfaces, wherein each of the optical lens groups is provided with one or two guiding
elements (28) which cause the optical axes of the optical lens groups to be in coincidence upon their displacement within the focal range of the optical module.

4. Objective module according to one of the preceding claims **characterized in that**
the ultrasonic motors are arranged on opposite sides of the optical axis of the optical module.

5. Objective module according to one of claims 1 to 3 **characterized in that**
the ultrasonic motors are arranged on the same side relative to the optical axis of the optical module.

6. Objective module according to one of the preceding claims **characterized by**
an integrated electronic control unit (50) for the electric drive.

7. Objective module according to claim 6,
**characterized in that**
the electronic control unit comprises two self-exciting generators (37) for the simultaneous, independent excitation of each motor, wherein the working frequency of each of the self-exciting generators is predetermined by the working resonance frequency of the motor connected to it and each of the self-exciting generators is provided with a power amplifier (54), a feedback element (59) with a feedback loop (58) and a switch (38) for changing the direction of the mobile elements.

8. Objective module according to claim 6,
**characterized in that**
the electronic control unit comprises one self-exciting generator (37) for the independent, alternate excitation of two motors connected to it, which is provided with a power amplifier (54), a feedback element (59) and a switch (38) for changing the direction of the mobile elements.

9. Objective module according to claim 7 or 8,
**characterized in that**
the or each switch (38) for changing directions is embodied as a two-pole switch (39, 40), wherein one pole is connected to the corresponding excitation electrode (32) of the respective ultrasonic motor and the other pole is connected via the feedback element and the power switch (55) of the power amplifier to the common motor electrode (34), wherein the control input (56) of the power switch is connected via a feedback loop to the feedback element (59), namely at the point where it is connected to the pole of the switch (42) for changing directions.

10. Objective module according to one of claims 6 to 9 **characterized in that**
at least one optical lens group is mechanically coupled to a position sensor (20, 21) the output of which is connected to the electronic control unit.

11. Objective module according to claim 10,
**characterized in that**
the position sensor for determining the position of the optical lens group is embodied as a linear potentiometer (22, 24) the pickoff (23, 25) of which is mechanically connected to the mobile element of the ultrasonic motor or to an optical lens group.

12. Objective module according to claim 10,
**characterized in that**
the position sensor for determining the position of the optical lens group is embodied as a semiconductor tensosensor (74) coupled to an elastic displacement-force converter, which is mechanically connected to the mobile element of the ultrasonic motor or to a lens group.

13. Objective module according to one of claims 10 to 12,
**characterized in that**
the electronic control unit is provided with a computing unit (80) for determining the relative position of the lens groups, to which the position sensors of the lens groups are connected and the outputs (81) of which are connected to the control inputs (51, 52, 53) of one or both self-exciting generators.

14. Objective module according to one of claims 7 to 13,
**characterized in that**
the electronic control unit is provided with a digital control unit (82) for positioning the optical lens groups, which has a zoom input with a focus input and the outputs of which are connected to the control inputs of one or both self-exciting generators.

15. Objective module according to one of the preceding claims, **characterized by**
a photoelectric imaging sensor (6) for converting the optical image into an electric signal.

## Revendications

1. Groupe structurel objectif (1) comprenant un groupe de lentilles formant zoom optique (4) et comprenant un groupe de lentilles optiques de focalisation, dont les axes optiques rassemblés forment l'axe optique (7) de l'objectif, et comprenant un entraînement électrique pour les deux groupes de lentilles,
ledit entraînement étant réalisé sous la forme de deux moteurs à ultrasons linéaires (9, 11),
**caractérisé en ce que** chacun des deux moteurs à ultrasons est formé comme une plaque piézo-électrique (12) avec deux éléments de friction (14) assemblés par pressage contre les faces frontales (13) opposées et formant, conjointement avec les éléments de pressage (15), les éléments mobiles des moteurs à ultrasons, dans lequel chacun des éléments mobiles est relié de manière élastique au groupe de lentilles correspondant, et les moteurs à ultrasons sont agencés de telle façon que la direction de déplacement des éléments mobiles s'étend essentiellement parallèlement à l'axe optique du module optique.

2. Groupe structurel objectif selon la revendication 1,
**caractérisé en ce que**
les faces frontales (13) des plaques piézo-électriques comportent des gorges de guidage (17) qui maintiennent les éléments mobiles de telle façon que les axes optiques (3, 5) des groupes de lentilles précités se trouvent en coïncidence lors de leurs déplacements à l'intérieur de la distance focale du module optique.

3. Groupe structurel objectif selon la revendication 1,
**caractérisé en ce que**
les faces frontales (13) des plaques piézo-électriques sont réalisées sous forme de surfaces planes, et chacun des groupes de lentilles optiques est pourvu d'un ou deux éléments de guidage (28) ayant pour effet que les axes optiques des groupes de lentilles optiques se trouvent en coïncidence lors de leurs déplacements à l'intérieur de la distance focale du module optique.

4. Groupe structurel objectif selon l'une des revendications précédentes, **caractérisé en ce que**
les moteurs à ultrasons sont agencés sur des côtés opposés de l'axe optique du module optique.

5. Groupe structurel objectif selon l'une des revendications 1 à 3, **caractérisé en ce que**
les moteurs à ultrasons sont agencés sur le même côté, par référence à l'axe optique du module optique.

6. Groupe structurel objectif selon l'une des revendications précédentes, **caractérisé par**
une unité de commande électronique (50) intégrée pour l'entraînement électrique.

7. Groupe structurel objectif selon la revendication 6,
**caractérisé en ce que** l'unité de commande électronique comprend deux générateurs (37) à autoexcitation pour l'excitation simultanée indépendante de chaque moteur, la fréquence de travail de chacun des générateurs à autoexcitation étant imposée par la fréquence de résonance de travail du moteur qui lui est raccordé, et chacun des générateurs à autoexcitation comprend un amplificateur de puissance (54), un élément de rétroaction (59) avec une branche de rétroaction (58), ainsi qu'un commutateur (38) pour modifier la direction des éléments mobiles.

8. Groupe structurel objectif selon la revendication 6,
**caractérisé en ce que**
l'unité de commande électronique comprend un générateur (37) à autoexcitation pour l'excitation alternée indépendante de deux moteurs qui lui sont raccordés, ledit générateur comprenant un amplificateur de puissance (54), un élément de rétroaction (59), ainsi qu'un commutateur (38), pour le changement de direction des éléments mobiles.

9. Groupe structurel objectif selon la revendication 7 ou 8,
**caractérisé en ce que**
le ou chaque commutateur (38) destiné au changement de direction est réalisé sous forme de commutateur bipolaire (38, 40), dans lequel un pôle est relié à l'électrode d'excitation correspondante (32) du moteur à ultrasons correspondant et l'autre pôle est relié à l'électrode moteur commune (34) via l'élément de rétroaction ainsi que le commutateur de puissance (53) de l'amplificateur de puissance, et l'entrée de commande (56) du commutateur de puissance est reliée à l'élément de rétroaction (59) via une ramification de rétroaction, et cela à l'emplacement où elle est reliée au pôle du commutateur (42) destiné au changement de direction.

10. Groupe structurel objectif selon l'une des revendications 6 à 9, **caractérisé en ce que**
au moins un groupe de lentilles optiques est couplé sur le plan mécanique à un capteur de position (20, 21) dont la sortie est reliée à l'unité de commande électronique.

11. Groupe structurel objectif selon la revendication 10,
**caractérisé en ce que**
le capteur de position destiné à déterminer la situation du groupe de lentilles optiques est réalisé sous forme de potentiomètre linéaire (22, 24), dont le point variable (23, 25) est relié mécaniquement à l'élément mobile du moteur à ultrasons ou d'un groupe de lentilles optiques.

12. Groupe structurel objectif selon la revendication 10,
**caractérisé en ce que**
le capteur de position destiné à déterminer la situation du groupe de lentilles optiques est réalisé sous forme de capteur de tension (74) à semi-conducteurs, qui est relié à un convertisseur course/force élastique, celui-ci étant relié mécaniquement à l'élément mobile du moteur à ultrasons ou d'un groupe de lentilles.

13. Groupe structurel objectif selon l'une des revendications 10 à 12, **caractérisé en ce que** l'unité de commande électronique est équipée d'une unité de calcul (80) pour déterminer la position relative des groupes de lentilles, à laquelle sont connectés les capteurs de position des groupes de lentilles et dont les sorties (81) sont connectés aux entrées de commandes (51, 52, 53) de l'un ou des deux générateurs à autoexcitation.

14. Groupe structurel objectif selon l'une des revendications 7 à 13, **caractérisé en ce que**
l'unité de commande électronique est pourvue d'une unité de commande numérique (82) pour le positionnement des groupes de lentilles optiques, qui possède une entrée de zoom avec une entrée de focalisation et dont les sorties sont connectées aux entrées de commande de l'un ou des deux générateurs à autoexcitation.

15. Groupe structurel objectif selon l'une des revendications précédentes,
**caractérisé par**
un capteur d'imagerie photoélectrique (6) pour convertir l'image optique en un signal électrique.
